# FASCICULE DE BREVET EUROPEEN

(11) **EP 3 529 463 B1**
(45) Date de publication et mention de la délivrance du brevet: **21.04.2021**
(21) Numéro de dépôt: 17794017.8
(22) Date de dépôt: 18.10.2017
(51) Int. Cl.: F01D 5/18

(54) **AUBE DE TURBOMACHINE À REFROIDISSEMENT OPTIMISÉ**
TURBINENMOTORSCHAUFEL MIT OPTIMIERTER KÜHLUNG
TURBINE ENGINE BLADE WITH OPTIMISED COOLING

(30) Priorité: 20.10.2016 FR 1601523
(43) Date de publication de la demande: 28.08.2019
(73) Titulaire: Safran Aircraft Engines, 75015 Paris (FR)
(72) Inventeur: DUJOL, Charlotte, Marie, 77550 Moissy-Cramayel (FR); CONGRATEL, Sébastien, Serge, Francis, 77550 Moissy-Cramayel (FR); ENEAU, Patrice, 77550 Moissy-Cramayel (FR); OSTINO, Léandre, 77550 Moissy-Cramayel (FR); SLUSARZ, Michel, 77550 Moissy-Cramayel (FR)
(74) Mandataire: Brevalex
(86) Numéro de dépôt international: PCT/FR2017/052862
(87) Numéro de publication internationale: WO 2018/073535

(56) Documents cités:
- WO-A1-2014/055259
- US-A- 5 356 265

## Description

### DOMAINE TECHNIQUE

L'invention concerne une aube de moteur d'aéronef de type turbomachine, tel que par exemple un turboréacteur à double flux ou un turbopropulseur à double flux.

### ÉTAT DE LA TECHNIQUE ANTÉRIEURE

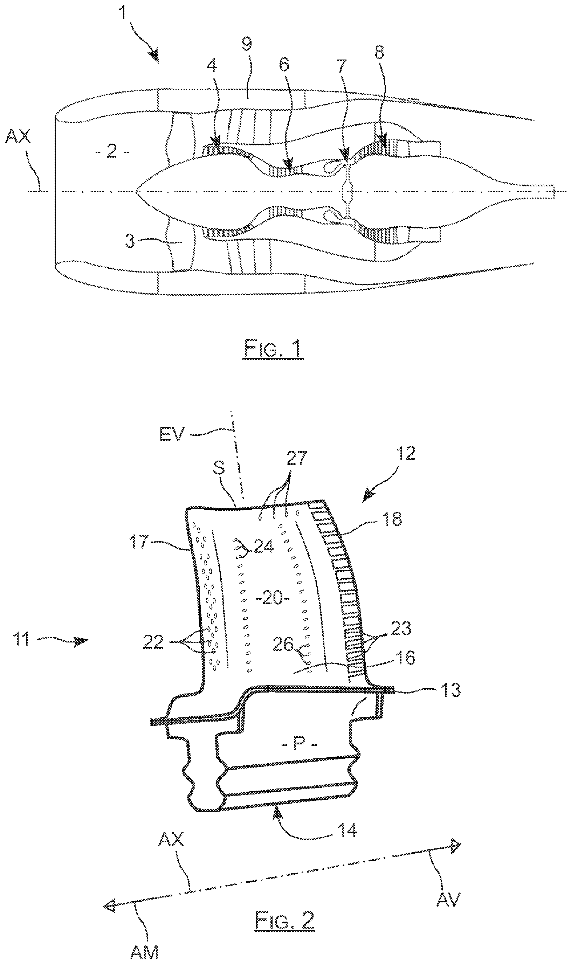

Comme représenté sur la figure 1, dans un tel moteur repéré par 1, l'air extérieur est admis dans une manche d'entrée 2 pour traverser une soufflante 3 comportant une série de pales rotatives avant de se scinder en un flux primaire central et un flux secondaire entourant le flux primaire.

Le flux primaire traverse ensuite des étages de compression 4, 6 avant d'arriver dans une chambre de combustion 7, après quoi il se détend en traversant un ensemble de turbines 8 avant d'être évacué vers l'arrière en générant de la poussée. Le flux secondaire est quant à lui propulsé directement vers l'arrière par la soufflante pour générer une poussée complémentaire.

Ce moteur 1 est délimité par un carter externe 9 s'étendant depuis sa partie avant pour former la manche d'entrée d'air, jusqu'à une partie arrière formant un conduit d'évacuation des flux, l'avant et l'arrière étant considérés par rapport au sens d'avancement de l'aéronef équipé de ce moteur.

La détente dans les turbines 8, qui permet d'entraîner le compresseur et la soufflante, a lieu à température élevée du fait qu'elle se produit immédiatement après la combustion, de sorte que ces turbines sont conçues pour fonctionner dans des conditions sévères de température, et de pression.

Chaque turbine comprend une succession d'étages comportant chacun une série d'aubes orientées radialement et régulièrement espacées autour d'un arbre central du moteur. Cet arbre central porte les éléments rotatifs de la turbine ainsi que les éléments rotatifs du compresseur et de la soufflante.

Les aubes de turbine qui sont soumises aux conditions les plus sévères sont celles des premiers étages de détente, à savoir les étages les plus proches de la zone de combustion, communément appelés étages haute pression.

En pratique, les besoins accrus en performances impliquent d'améliorer la tenue des aubes de turbine haute pression en particulier en ce qui concerne leur tenue en température. Cette situation conduit à reconsidérer le refroidissement de ces aubes pour l'améliorer afin qu'elles puissent supporter ces nouvelles conditions de fonctionnement.

Ce refroidissement est assuré en faisant circuler à l'intérieur de ces aubes de l'air frais qui est prélevé dans le turboréacteur en amont de la combustion. Cet air est admis en pied d'aube, pour cheminer le long d'un circuit interne de l'aube afin de la refroidir, et il est évacué hors de l'aube par des perçages traversant la paroi de cette aube et répartis sur cette paroi. Ces perçages servent à évacuer l'air de refroidissement, et à créer à la surface externe de l'aube un film d'air plus froid que l'air issu de la combustion, ce qui contribue aussi à limiter la température de l'aube.

Des aubes assurant ce type de refroidissement sont connues notamment des documents WO2014055259A1 et US5356265A, mais ces agencements s'avèrent insuffisants au regard des performances thermiques attendues.

Le but de l'invention est de proposer une structure d'aube permettant d'améliorer l'efficacité de refroidissement de cette aube.

### EXPOSÉ DE L'INVENTION

A cet effet, l'invention a pour objet une turbine d'une turbomachine telle qu'un turbopropulseur ou un turboréacteur, l'aube comprenant : un pied, une pale portée par le pied et s'étendant selon une direction d'envergure en se terminant par un sommet, la pale comprenant un bord d'attaque et un bord de fuite situé en aval du bord d'attaque, la pale comprenant une paroi d'intrados et une paroi d'extrados espacées l'une de l'autre et reliant le bord d'attaque au bord de fuite, cette pale comprenant également :
- des conduits de refroidissement s'étendant chacun latéralement depuis la paroi d'extrados jusqu'à une paroi interne amont ou jusqu'à une paroi interne aval ;
- une cavité latérale amont et une cavité latérale aval longeant la paroi d'intrados pour former un écran thermique, en étant espacées l'une de l'autre le long de la paroi d'intrados ;
- la cavité latérale amont s'étendant latéralement depuis la paroi d'intrados jusqu'à la paroi interne amont selon une épaisseur inférieure à sa longueur le long de la paroi d'intrados ;
- la cavité latérale aval s'étendant latéralement depuis la paroi d'intrados jusqu'à la paroi interne aval selon une épaisseur inférieure à sa longueur le long de la paroi d'intrados cette cavité latérale amont protégeant thermiquement deux conduits de refroidissement;
- un conduit de refroidissement s'étendant transversalement depuis la paroi d'intrados jusqu'à la paroi d'extrados entre la cavité latérale amont et la cavité latérale aval; et dans laquelle l'épaisseur des cavités latérales amont et aval est inférieure aux épaisseurs des autres conduits de l'aube.

Avec cet agencement, les parois internes sont distinctes et séparées l'une de l'autre le long du squelette de l'aube. Cette séparation en deux parties favorise une meilleure tenue aux dilatations thermiques que subit l'aube en service.

L'invention concerne également une aube ainsi définie, dans laquelle la cavité latérale amont et la cavité latérale aval sont diosposées pour former deux branches d'un motif correspondant à la lettre U s'étendant selon la direction d'envergure, chaque cavité latérale correspondant à une branche de ce U, et dans lequel ces deux cavités latérales sont alimentées conjointement depuis le pied par une même embouchure de ce pied.

L'invention concerne également une aube ainsi définie, dans laquelle un conduit s'étendant de la paroi d'extrados à la paroi interne amont est raccordé au conduit s'étendant de la paroi d'extrados à la paroi d'intrados qui est lui-même raccordé à un conduit s'étendant de la paroi d'extrados à la paroi interne aval, selon un agencement de type en circuit trombone pour fournir de l'air de refroidissement au bord de fuite.

L'invention concerne également une aube ainsi définie, comprenant une rampe aval alimentée par un conduit du circuit trombone cette rampe aval s'étendant transversalement de la paroi d'intrados à la paroi d'extrados, et dans laquelle la paroi d'intrados comporte des perçages débouchant dans la rampe aval du circuit trombone pour former un film d'air externe de refroidissement de la paroi d'intrados.

L'invention concerne également une aube ainsi définie, dans laquelle la rampe aval est alimentée depuis le conduit du circuit trombone par des passages calibrés.

L'invention concerne également une aube ainsi définie, comprenant une cavité sous baignoire s'étendant depuis une région centrale du sommet jusqu'au bord de fuite, et au moins un conduit central alimentant directement cette cavité sous baignoire avec de l'air collecté au niveau du pied.

L'invention concerne également une aube ainsi définie, dans laquelle le bord de fuite comporte du côté intrados une série de fentes traversantes alimentées en air de refroidissement, et dans laquelle ces fentes comportent :
- une ou plusieurs dernières fentes proches du sommet qui sont alimentées par la cavité sous baignoire ;
- des fentes qui sont alimentées par un conduit aval de la pale.

L'invention concerne également une aube ainsi définie, comprenant un circuit amont pour refroidir le bord d'attaque de la pale.

L'invention concerne également des moyens de fonderie pour la fabrication d'une aube ainsi définie, comprenant des empreintes et un ensemble de noyaux destinés à la formation des conduits internes et rampes, et des cavités internes formant écran.

L'invention concerne également une turbine de turbomachine comprenant une aube ainsi définie.

L'invention concerne également une turbomachine comprenant une turbine ainsi définie.

### BRÈVE DESCRIPTION DES DESSINS

La figure 1 est une vue schématique d'un turboréacteur à double flux en coupe longitudinale ;
La figure 2 est une vue en perspective d'une aube de turbine haute pression ;
La figure 3 est une vue de l'aube selon l'invention selon un plan de section normal à sa direction d'envergure ;
La figure 4 est une vue latérale montrant un circuit amont de refroidissement du bord d'attaque de l'aube selon l'invention ;
La figure 5 est une vue latérale montrant un circuit médian et un circuit central de refroidissement de l'aube selon l'invention ;
La figure 6 est une vue latérale montrant un circuit aval de refroidissement du bord de fuite de l'aube selon l'invention ;
La figure 7 est une vue latérale montrant du côté intrados les différents circuits de refroidissement de l'aube selon l'invention autres que son circuit latéral ;
La figure 8 est une vue latérale montrant du côté intrados les différents circuits de refroidissement de l'aube selon l'invention ;
La figure 9 est une vue latérale montrant du côté extrados les différents circuits de refroidissement de l'aube selon l'invention.

### EXPOSÉ DÉTAILLÉ DE MODES DE RÉALISATION PARTICULIERS

### Structure de l'aube

L'aube selon l'invention, repérée par 11 sur la figure 2, comprend un pied P par lequel elle est fixée à un corps rotatif non représenté appelé disque de turbine, et une pale 12 portée par ce pied P, avec une plateforme 13 qui raccorde le pied P à la pale 12. Cette aube 11 comporte des circuits internes dans lesquels circule de l'air de refroidissement admis en face inférieure 14 du pied P.

La pale 12 a une forme vrillée autour d'un axe dit d'envergure EV perpendiculaire à un axe AX de rotation de l'arbre portant l'aube, et elle présente un contour sensiblement rectangulaire partant d'une base 16 par laquelle elle est raccordée au pied P.

Cette pale 12 comprend un bord d'attaque 17 sensiblement parallèle à la direction d'envergure EV et situé à l'amont AM ou avant de l'aube, par rapport à la direction d'avancement du moteur qu'elle équipe. Elle comporte aussi un bord de fuite 18 orienté à peu près parallèlement au bord d'attaque 17 et espacé de celui-ci le long de l'axe AX pour être situé à l'aval AV ou arrière de l'aube. Elle comprend encore un sommet S à peu près parallèle à la base 16 et espacé de celle-ci selon la direction d'envergure EV.

Les deux parois principales de cette aube sont sa paroi d'intrados 20, visible dans la figure 2, et sa paroi d'extrados, qui sont espacées l'une de l'autre tout en étant réunies au niveau du bord d'attaque 17, au niveau du bord de fuite 18, et dans la région du sommet S.

Le bord d'attaque 17 qui est bombé comporte des trous de refroidissements 22 traversant sa paroi, et le bord de fuite 18 qui est effilé comporte une série de fentes de refroidissement 23. Ces fentes 23 sont de faibles longueurs et s'étendant parallèlement à la direction d'envergure EV, en étant espacées et dans le prolongement les unes des autres, et situées à faible distance du bord de fuite proprement dit. Chaque fente 23 traverse l'intrados pour souffler de l'air sur la paroi d'intrados vers le bord de fuite qui est pourvu de nervures externes canalisant cet air parallèlement à l'axe AX.

La paroi d'intrados comporte une séries de trous 24 répartis sensiblement parallèlement au bord d'attaque 17 en aval de celui-ci, et une autre série de trous 26 distribués sensiblement parallèlement au bord de fuite 18, et situées en amont des fentes 23. Ces trous permettent de former un film d'air en face externe de l'intrados pour le refroidir.

Au niveau de son sommet S, cette aube comporte une paroi de fermeture perpendiculaire à la direction d'envergure EV, qui raccorde les parois d'intrados et d'extrados. Cette paroi de fermeture qui n'est pas visible sur la figure 2 est située en retrait vers l'axe AX par rapport aux bords libres des parois d'intrados et d'extrados, pour former conjointement avec ces bords une portion creuse, dite en baignoire, qui est ouverte en direction opposée à l'axe AX.

Une autre série de trous 27 traversant la paroi d'intrados le long du sommet S, distribués parallèlement à la paroi de fermeture, permet de former un film d'air sur la face externe de l'intrados dans la région du sommet S pour le refroidir.

Cette aube est une pièce monobloc fabriquée par fonderie d'un matériau métallique, en utilisant un ensemble de noyaux pour délimiter les conduits internes, ces noyaux étant retirés après coulée et refroidissement par exemple avec un processus d'attaque chimique.

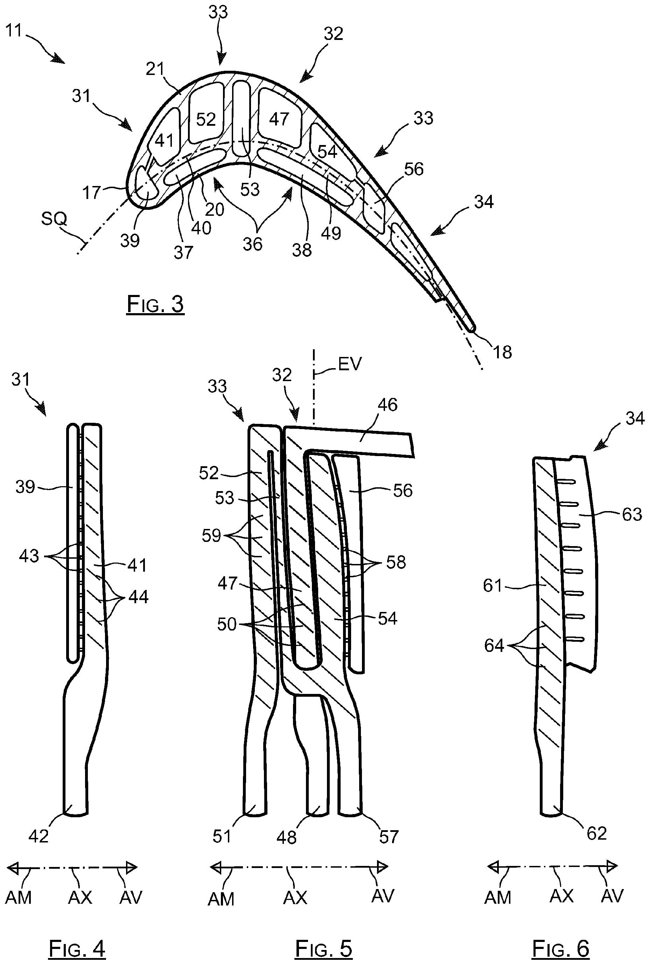

Les figures 4 à 9 montrent des régions internes de l'aube qui y sont représentées par les formes des noyaux permettant de fabriquer cette aube. Ainsi, les formes de ces figures sont en relief, mais elles constituent des représentations des formes creuses de l'aube.

L'aube 11 selon l'invention comporte cinq circuits internes de refroidissement. Elle comprend un circuit amont 31 ; un circuit central 32; un circuit médian 33 s'étendant de part et d'autre du circuit central ; et un circuit aval 34. Complémentairement, un circuit latéral 36 comportant principalement une cavité latérale amont 37 et une cavité latérale aval 38 de faible épaisseur qui longent l'intrados en étant espacées l'une de l'autre le long de celui-ci pour constituer un écran thermique.

### Circuit amont

Comme visible sur la figure 4, le circuit amont 31 comporte une rampe amont 39 ainsi qu'un conduit amont 41 alimentant cette rampe 39, et s'étendant parallèlement à la direction d'envergure EV. Le conduit amont 41 s'étend depuis le pied de pâle pour y collecter de l'air à son embouchure 42, jusqu'à une région du sommet S située sous la baignoire, c'est-à-dire sous la paroi de fermeture. La rampe amont 39 s'étend depuis la base 16 jusqu'à la région sous baignoire, et elle est alimentée de manière calibrée par des passages calibrés 43 régulièrement espacés le long de la direction d'envergure EV, qui relient chacun le conduit amont 41 à la rampe amont 39.

Chaque passage 43 a un diamètre calibré, c'est-à-dire choisi pour obtenir dans la zone de la rampe 39 qu'il alimente un débit d'air souhaité. Cette alimentation calibrée de la rampe amont 39 assure un refroidissement du bord d'attaque de type par impact.

Complémentairement, le conduit amont 41 comporte des promoteurs de turbulence 44, c'est-à-dire des éléments formant relief à sa face interne, qui génèrent des turbulences dans l'écoulement d'air pour accroître l'échange thermique avec les parois de l'aube qui délimitent ce conduit 41.

Le conduit amont 41 est protégé thermiquement du côté intrados par la cavité latérale amont 37 du circuit latéral 36, de sorte qu'il s'étend latéralement de la paroi d'extrados 21 jusqu'à une paroi interne amont 40 qui le sépare de la cavité amont 37.

### Circuit central

Le circuit central 32 qui apparaît sur la figure 5 comprend une cavité supérieure dite cavité sous baignoire 46, et un conduit central 47 qui alimente directement cette cavité sous baignoire 46, pour refroidir le sommet. Le conduit central s'étend depuis le pied P de l'aube où il comporte une embouchure d'admission d'air 48, et il débouche dans le fond de la cavité sous baignoire 46.

La cavité sous baignoire 46 s'étend longitudinalement depuis une région centrale du sommet S, jusqu'au bord de fuite 18, pour alimenter en air frais une ou plusieurs des fentes 23 qui sont les plus proches du sommet S.

Cette cavité sous baignoire 46 est délimitée latéralement d'une part par l'extrados sur toute sa longueur, et d'autre part par l'intrados en partie arrière de pale et par une paroi interne aval 49 qui la sépare de la cavité aval 38 du circuit latéral 36 dans la portion centrale du sommet S correspondant à l'avant de cette cavité sous baignoire 46.

Cette cavité sous baignoire 46 est délimitée le long de l'axe d'envergure EV par un fond parallèle à la paroi de fermeture et espacé de celle-ci, et par la paroi de fermeture.

Le conduit central 47 ainsi que la portion avant de la cavité sous baignoire 46 sont thermiquement protégés par la cavité latérale aval 38 du circuit latéral 36. Comme visible sur la figure 3, le conduit central 47 s'étend latéralement depuis la paroi d'extrados jusqu'à la paroi interne aval 49 qui le sépare de la cavité latérale aval 38. Par ailleurs, la cavité sous baignoire 46 et le conduit central 47 qui l'alimente, peuvent être munis de promoteurs de turbulences 50.

Des perçages 27 traversant la paroi d'intrados vers cette cavité sous baignoire permettent de refroidir la face externe d'intrados au niveau du sommet S.

### Circuit médian

Le circuit médian 33 qui est visible sur la figure 5 comporte trois conduits 52, 53 et 54 communiquant les uns avec les autres selon un agencement en trombone, et une rampe aval 56 alimentée de façon calibrée par le troisième conduit 54. Les conduits 52, 53 et 54 ainsi que la rampe 56 s'étendent parallèlement à la direction d'envergure EV, le premier et le deuxième conduit 52 et 53 étant situés en amont du conduit central 47 du circuit 32, alors que le troisième conduit 54 et la rampe 56 sont en aval du conduit 47. Autrement dit, les conduits du circuit médian 33 sont situés de part et d'autre du conduit central 47.

Ce circuit médian 33 formant trombone permet d'obtenir une répartition uniforme du refroidissement dans l'aube en réduisant le nombre d'embouchures dans le pied. Il permet d'obtenir un refroidissement efficace du bord de fuite à partir des conduits de refroidissement qui présentent une section maximisée.

Le premier conduit 52, qui longe le conduit amont 41 du circuit amont 31, collecte de l'air au niveau du pied P par son embouchure 51 et il s'étend jusqu'à une région sous baignoire où il est raccordé au deuxième conduit 53.

Ce premier conduit 52 s'étend latéralement depuis la paroi d'extrados 21 jusqu'à la paroi interne amont 40 qui le sépare de la cavité latérale amont 37. Comme visible sur la figure 3, le premier conduit 52, ainsi que le conduit amont 41, sont protégés thermiquement du côté intrados par la cavité latérale amont 37 du circuit latéral 36.

Le deuxième conduit 53 du circuit médian 33 longe le premier conduit 52 en étant plus large que les conduits 52 et 54 pour s'étendre latéralement depuis la paroi d'intrados 20 jusqu'à la paroi d'extrados 21. Ce deuxième conduit 53 est raccordé dans la région de la base 16 de l'aube au troisième conduit 54, cette région de raccordement se prolongeant dans le pied P selon une forme d'embouchure 57 qui est en fait fermée. Cette fermeture est réalisée après fabrication du corps d'aube par fonderie par brasure d'une plaque fermant l'embouchure 57, la forme d'embouchure 57 servant en fait à maintenir en position l'élément de noyau délimitant le circuit médian 33 durant l'opération de fabrication par fonderie.

Comme visible sur la figure 3, ce deuxième conduit 53 est majoritairement en contact avec des parois internes de l'aube. Il présente en section une largeur importante latéralement, mais une faible épaisseur dans le sens de la longueur c'est-à-dire le long du squelette SQ de l'aube. Ce deuxième conduit 53 présente ainsi des zones de contact avec l'intrados et l'extrados qui sont peu étendues, ce qui limite son échauffement.

Le troisième conduit 54 est espacé du deuxième conduit 53 le long de l'axe AX, et il s'étend depuis la base 16 jusqu'à la région située sous la cavité sous 46, parallèlement à la rampe aval 56 qu'il longe tout en étant en amont de celle-ci. Ce troisième conduit 54 s'étend latéralement depuis la paroi d'extrados 21 jusqu'à la paroi interne aval 49 qui le sépare de la cavité latérale aval 38.

La rampe aval 56 longe le troisième conduit 54 en étant alimentée de manière calibrée par celui-ci au moyen d'une série de passages calibrés 58, qui sont espacés les uns des autres le long d'un axe parallèle à l'axe EV, et qui s'étendent parallèlement à l'axe AX pour alimenter uniformément en air la rampe aval 56. Cette rampe aval 56 n'est pas protégée par la cavité latérale aval 38 : elle s'étend latéralement depuis la paroi d'extrados 21 jusqu'à la paroi d'intrados 20, et elle alimente au moyen des perçages 26 traversant l'intrados 20, un film d'air externe qui couvre et protège thermiquement le bord de fuite 18 du côté intrados.

Comme visible sur la figure 3, le troisième conduit 54, ainsi que le conduit central 47 sont isolés thermiquement de l'intrados 20 par la cavité latérale aval 38. Les conduits 52, 53, 54 ainsi que la rampe 56 sont avantageusement pourvus de promoteurs de turbulences 59.

### Circuit aval

Comme visible sur la figure 6, le circuit aval 34 comporte un conduit aval 61 longeant la rampe aval 56. Il s'étend parallèlement à la direction EV depuis une embouchure 62 située au niveau du pied P, jusqu'à la cavité sous baignoire 46, et une rampe 63 d'alimentation des fentes du bord de fuite qui ne sont pas alimentées par la cavité sous baignoire 46. Ce conduit aval 61 comporte avantageusement des promoteurs de turbulence 64.

### Circuit latéral

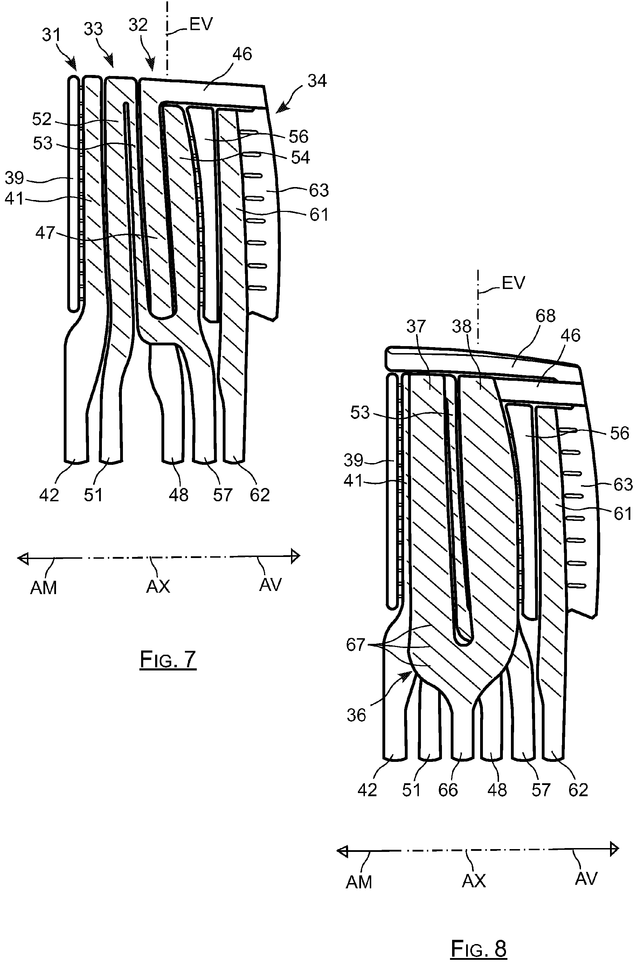

Le circuit latéral 36 qui apparaît plus clairement sur la figure 8 comporte une cavité latérale amont 37 et une cavité latérale aval 38 longeant l'extrados en étant espacées l'une de l'autre le long de celui-ci. Ces cavités ont une faible épaisseur vis-à-vis de l'épaisseur de l'aube et des épaisseurs de ses différents conduits et rampes : chaque cavité présente une épaisseur, mesurée selon une direction normale au squelette SQ, qui est inférieure à sa longueur le long de la paroi d'intrados, mesurée selon une direction sensiblement parallèle à celle de l'axe AX.

Ces cavités 37 et 38 sont alimentées par une même embouchure 66 située dans le pied P tout en étant distinctes ce qui permet une répartition homogène de l'air en limitant les zones de stagnation de l'air. Ces cavités latérales sont avantageusement pourvues de promoteurs de turbulence 67. Complémentairement, des perçages tels que les perçages 24 traversant l'intrados 20 pour déboucher dans ces cavités 37, 38 assurent une évacuation de l'air tout en formant un film en face externe de l'intrados 20.

Les cavités 37 et 38 du circuit latéral 36 sont ainsi agencées en U selon la direction d'envergure, chaque cavité correspondant à une branche du motif en U, et elles sont alimentées conjointement depuis une même embouchure 66, pour réduire le nombre de ces embouchures afin d'améliorer la tenue mécanique du pied. Cet agencement permet de protéger thermiquement le circuit médian 33 alimentant la rampe 56 de façon efficace, et elle favorise la tenue mécanique de la pâle grâce aux deux cavité distinctes 37, 38 qui la renforcent.

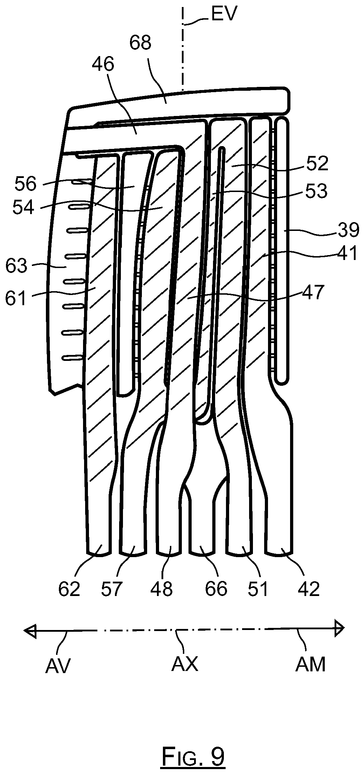

La cavité latérale amont 37 s'étend depuis le pied P jusqu'à la région du sommet S en ayant un contour généralement rectangulaire. Elle se termine sous la baignoire, qui apparaît sur les figures 8 et 9 où elle est repérée par 68, de manière à ne pas la couvrir. Elle s'étend sur une longueur suffisante pour masquer ou couvrir le conduit amont 41 ainsi que le premier conduit 52 du circuit médian 33 sur la majorité de leur hauteur. Elle s'étend latéralement depuis la paroi d'intrados jusqu'à la paroi interne amont 40.

La cavité latérale aval 38 s'étend elle aussi depuis le pied P jusqu'à la région du sommet S sous la baignoire 68 en ayant elle aussi un contour généralement rectangulaire. Elle se termine également sous la baignoire afin de ne pas la couvrir, et elle s'étend sur une longueur suffisante pour couvrir le conduit central 47 ainsi que le troisième conduit 54 du circuit médian. Elle s'étend latéralement depuis la paroi d'intrados 20 jusqu'à la paroi interne aval 49.

Les cavités 37 et 38 s'étendent uniquement entre les cavités de refroidissement et l'intrados afin de libérer de l'espace pour les conduits 47, 54 qui peuvent ainsi bénéficier d'une plus grande section pour améliorer le refroidissement du bord de fuite. Ceci permet d'apporter un maximum d'air dans la zone du bord de fuite pour limiter les contraintes thermomécanique dans cette zone qui est sensible sur le plan mécanique en raison de son étroitesse.

### Avantages

Comme visible sur la figure 3, les parois internes 40 et 49 sont distinctes et séparées l'une de l'autre le long du squelette SQ de l'aube par le deuxième conduit 53 du circuit central 32. Cette séparation en deux parties de la paroi interne de l'aube favorise une meilleure tenue aux dilatations thermiques que subit l'aube dont la température interne diffère d'une partie à l'autre. Autrement dit, l'agencement de l'aube selon l'invention permet de limiter la longueur du squelette central en le scindant en deux parties pour assouplir la structure interne.

D'une manière générale, le circuit amont 31 refroidit le bord d'attaque 17 et une portion amont de l'extrados 21 ; le circuit central 32 refroidit la baignoire et une portion du sommet du bord de fuite 18 ; le circuit médian 33 refroidit l'extrados 21 et une portion aval de l'intrados 20 ; et le circuit aval 34 refroidit le bord de fuite 18. L'invention permet ainsi de dissocier l'alimentation en air des fentes du bord de fuite et des perçages intrados sans pénaliser le refroidissement d'une zone par rapport à l'autre.

Les cavités latérales amont et aval 37, 38 isolent thermiquement les conduits du circuit 33 pour maintenir les régions centrales de l'aube à une plus basse température, ce qui contribue à améliorer sa tenue mécanique. Notamment, le fait que le conduit central 47 est protégé par la cavité latérale aval 38 permet à ce canal d'alimenter la cavité sous baignoire avec un air plus frais.

## Revendications

1. Aube de turbine d'une turbomachine telle qu'un turbopropulseur ou un turboréacteur, l'aube comprenant : un pied (P), une pale (12) portée par le pied (P) et s'étendant selon une direction d'envergure (EV) en se terminant par un sommet (S), la pale (12) comprenant un bord d'attaque (17) et un bord de fuite (18) situé en aval du bord d'attaque (17), la pale (12) comprenant une paroi d'intrados (20) et une paroi d'extrados (21) espacées l'une de l'autre et reliant le bord d'attaque (17) au bord de fuite (18), cette pale comprenant également :
- des conduits de refroidissement (41, 52, 47, 54) s'étendant chacun latéralement depuis la paroi d'extrados (21) jusqu'à une paroi interne amont (40) ou jusqu'à une paroi interne aval (49) ;
- une cavité latérale amont (37) et une cavité latérale aval (38) longeant la paroi d'intrados (20) pour former un écran thermique, en étant espacées l'une de l'autre le long de cette paroi d'intrados (20) ;
- la cavité latérale amont (37) s'étendant latéralement depuis la paroi d'intrados (20) jusqu'à la paroi interne amont (40) selon une épaisseur inférieure à sa longueur le long de la paroi d'intrados (20), cette cavité latérale amont (37) protégeant thermiquement deux conduits de refroidissement (41, 52) ;
- la cavité latérale aval (38) s'étendant latéralement depuis la paroi d'intrados (20) jusqu'à la paroi interne aval (49) selon une épaisseur inférieure à sa longueur le long de la paroi d'intrados (20) ;- un conduit (53) de refroidissement s'étendant transversalement depuis la paroi d'intrados (20) jusqu'à la paroi d'extrados (21) entre la cavité latérale amont (37) et la cavité latérale aval (38) ;
**caractérisée en ce que** l'épaisseur des cavités latérales amont et aval (37, 38) est inférieure aux épaisseurs des autres conduits de l'aube.

2. Aube selon la revendication 1, dans laquelle la cavité latérale amont (37) et la cavité latérale aval (38) sont disposées pour former deux branches d'un motif correspondant à la lettre U s'étendant selon la direction d'envergure (EV), chaque cavité latérale correspondant à une branche de ce U, et dans lequel ces deux cavités latérales (37, 38) sont alimentées conjointement depuis le pied (P) par une même embouchure (66) de ce pied (P).

3. Aube selon la revendication 1 ou 2, dans laquelle un conduit (52) s'étendant de la paroi d'extrados (21) à la paroi interne amont (40) est raccordé au conduit (53) s'étendant de la paroi d'extrados (21) à la paroi d'intrados (20) qui est lui-même raccordé à un conduit (54) s'étendant de la paroi d'extrados (21) à la paroi interne aval (49), selon un agencement de type en circuit trombone (33) pour fournir de l'air de refroidissement au bord de fuite (18).

4. Aube selon la revendication 3, comprenant une rampe aval (56) alimentée par un conduit (54) du circuit trombone (33) cette rampe aval (56) s'étendant transversalement, de la paroi d'intrados (20) à la paroi d'extrados (21), et dans laquelle la paroi d'intrados (20) comporte des perçages débouchant dans la rampe aval (56) pour former un film d'air externe de refroidissement de la paroi d'intrados (20).

5. Aube selon la revendication 4, dans laquelle la rampe aval (56) est alimentée depuis le conduit (54) du circuit trombone (33) par des passages calibrés (58).

6. Aube selon l'une des revendications 2 à 5, comprenant une cavité sous baignoire (46) s'étendant depuis une région centrale du sommet (S) jusqu'au bord de fuite (18), et au moins un conduit central (47) alimentant directement cette cavité sous baignoire (46) avec de l'air collecté au niveau du pied (P).

7. Aube selon la revendication 6, dans laquelle le bord de fuite comporte du côté intrados une série de fentes traversantes (23) alimentées en air de refroidissement, dans laquelle ces fentes (23) comportent :
- une ou plusieurs dernières fentes proches du sommet (S) qui sont alimentées par la cavité sous baignoire (46) ;
- des fentes (23) qui sont alimentées par un conduit aval (61) de la pale (12).

8. Aube selon l'une des revendications précédentes, comprenant un circuit amont (31) pour refroidir le bord d'attaque (17) de la pale (12).

9. Moyens de fonderie pour la fabrication d'une aube selon l'une des revendications 1 à 8, comprenant des empreintes et un ensemble de noyaux destinés à la formation des conduits internes et rampes, et des cavités internes formant écran.

10. Turbine de turbomachine comprenant une aube selon l'une quelconque des revendications 1 à 8.

11. Turbomachine comprenant une turbine selon la revendication précédente.

## Patentansprüche

1. Turbinenschaufel einer Turbomaschine, wie z.B. eines Turbopropellertriebwerks oder eines Turboluftstrahltriebwerks, wobei die Schaufel Folgendes umfasst: einen Fuß (P), ein Schaufelblatt (12), das von dem Fuß (P) getragen wird und sich in einer Richtung der Flügelspannweite (EV) erstreckt, indem es in einem Scheitel (S) endet, wobei das Schaufelblatt (12) eine Vorderkante (17) und eine Hinterkante (18) aufweist, die stromabwärts der Vorderkante (17) liegt, wobei das Blatt (12) eine druckseitige Wand (20) und eine saugseitige Wand (21) aufweist, die voneinander beabstandet sind und die Vorderkante (17) mit der Hinterkante (18) verbinden, wobei das Schaufelblatt außerdem Folgendes aufweist:
- Kühlkanäle (41, 52, 47, 54), die sich jeweils seitlich von der saugseitigen Wand (21) zu einer stromaufwärtigen Innenwand (40) oder zu einer stromabwärtigen Innenwand (49) erstrecken;
- eine stromaufwärtige seitliche Vertiefung (37) und eine stromabwärtige seitliche Vertiefung (38), die entlang der druckseitigen Wand (20) verlaufen, um einen Hitzeschild auszubilden, indem sie entlang der druckseitigen Wand (20) voneinander beabstandet sind;
- wobei sich die stromaufwärtige seitliche Vertiefung (37) seitlich von der druckseitigen Wand (20) zu der stromaufwärtigen Innenwand (40) in einer Dicke erstreckt, die geringer als ihre Länge entlang der druckseitigen Wand (20) ist, wobei die stromaufwärtige seitliche Vertiefung (37) zwei Kühlkanäle (41, 52) wärmetechnisch schützt;
- wobei sich die stromabwärtige seitliche Vertiefung (38) seitlich von der druckseitigen Wand (20) zu der stromabwärtigen Innenwand (49) in einer Dicke erstreckt, die geringer als ihre Länge entlang der druckseitigen Wand (20) ist;
- einen Kühlkanal (53), der sich quer von der druckseitigen Wand (20) bis zur saugseitigen Wand (21) zwischen der stromaufwärtigen seitlichen Vertiefung (37) und der stromabwärtigen seitlichen Vertiefung (38) erstreckt;
**dadurch gekennzeichnet, dass** die Dicke der stromaufwärtigen und stromabwärtigen seitlichen Vertiefungen (37, 38) geringer als die Dicken der anderen Kanäle der Schaufel ist.

2. Schaufel nach Anspruch 1, wobei die stromaufwärtige seitliche Vertiefung (37) und die stromabwärtige seitliche Vertiefung (38) so angeordnet sind, dass sie zwei Schenkel eines dem Buchstaben U entsprechenden Musters ausbilden, die sich in Richtung der Flügelspannweite (EV) erstrecken, wobei jede seitliche Vertiefung einem Schenkel dieses U entspricht, und wobei die beiden seitlichen Vertiefungen (37, 38) gemeinsam von dem Fuß (P) aus durch dieselbe Öffnung (66) des Fußes (P) gespeist werden.

3. Schaufel nach Anspruch 1 oder 2, wobei ein von der saugseitigen Wand (21) zu der stromaufwärtigen Innenwand (40) verlaufender Kanal (52) mit dem von der saugseitigen Wand (21) zu der druckseitigen Wand (20) verlaufenden Kanal (53) verbunden ist, der wiederum mit einem von der saugseitigen Wand (21) zu der stromabwärtigen Innenwand (49) verlaufenden Kanal (54) in einer büroklammerartigen Anordnung verbunden ist, um der Hinterkante (18) Kühlluft zuzuführen.

4. Schaufel nach Anspruch 3, mit einer stromabwärtigen Rampe (56), die durch einen Kanal (54) des büroklammerartigen Kreises (33) gespeist wird, wobei sich die stromabwärtige Rampe (56) quer von der druckseitigen Wand (20) zu der saugseitigen Wand (21) erstreckt, und wobei die druckseitige Wand (20) Bohrungen aufweist, die in die stromabwärtige Rampe (56) münden, um eine äußere Luftschicht zur Kühlung der druckseitigen Wand (20) zu bilden.

5. Schaufel nach Anspruch 4, wobei die stromabwärtige Rampe (56) über kalibrierte Durchlässe (58) aus dem Kanal (54) des büroklammerartigen Kreises (33) gespeist wird.

6. Schaufel nach einem der Ansprüche 2 bis 5, mit einer wannenförmigen Vertiefung (46), die sich von einem mittigen Bereich des Scheitels (S) zur Hinterkante (18) erstreckt, und mindestens einem mittigen Kanal (47), der die wannenförmige Vertiefung (46) direkt mit auf Höhe des Fußes (P) angesammelter Luft versorgt.

7. Schaufel nach Anspruch 6, wobei die Hinterkante auf der Druckseite eine Reihe von mit Kühlluft gespeisten, durchgehenden Schlitzen (23) aufweist, wobei die Schlitze (23) Folgendes aufweisen:
- einen oder mehrere letzte Schlitze nahe dem Scheitel (S), welche über die wannenförmige Vertiefung (46) gespeist werden;
- Schlitze (23), welche über einen stromabwärtigen Kanal (61) des Schaufelblatts (12) gespeist werden.

8. Schaufel nach einem der vorhergehenden Ansprüche, mit einem stromaufwärtigen Kreislauf (31) zum Kühlen der Vorderkante (17) des Schaufelblatts (12).

9. Gießeinrichtung zur Herstellung einer Schaufel nach einem der Ansprüche 1 bis 8, mit Prägungen und einem Satz von Kernen zur Ausbildung von inneren Kanälen und Rampen, sowie mit inneren Vertiefungen, die eine Abschirmung bilden.

10. Turbine einer Turbomaschine, mit einer Schaufel nach einem der Ansprüche 1 bis 8.

11. Turbomaschine mit einer Turbine nach dem vorhergehenden Anspruch.

## Claims

1. Turbine blade of a turbomachine such as a turboprop or a turbojet, the blade comprising: a root (P), an airfoil (12) supported on the root (P) and extending along a length direction (EV), terminating at a tip (S), the airfoil (12) comprising a leading edge (17) and a trailing edge (18) located downstream from the leading edge (17), the airfoil (12) comprising an intrados wall (20) and an extrados wall (21) at a spacing from each other and connecting the leading edge (17) to the trailing edge (18), this airfoil also comprising:
- cooling ducts (41, 52, 47, 54) each extending laterally from the extrados wall (21) as far as an upstream internal wall (40) or as far as a downstream internal wall (49);
- an upstream lateral cavity (37) and a downstream lateral cavity (38) extending along the intrados wall (20) to form a heat shield, at a spacing from each other along this intrados wall (20);
- the upstream lateral cavity (37) extending laterally from the intrados wall (20) as far as the upstream internal wall (40) along a thickness of less than its length along the intrados wall (20), this upstream lateral cavity (37) protecting thermally two cooling ducts (41, 52) ;
- the downstream lateral cavity (38) extending laterally from the intrados wall (20) as far as the downstream internal wall (49) along a thickness of less than its length along the intrados wall (20);
- a cooling conduit (53) extending transversely from the intrados wall (20) as far as the extrados wall (21) between the upstream lateral cavity (37) and the downstream lateral cavity (38) ;
**characterized in that** the thickness of the lateral cavities (37, 38) is inferior to the thickness of the other ducts of the blade.

2. Blade according to claim 1, wherein the upstream lateral cavity (37) and the downstream lateral cavity (38) are arranged so as to form two branches of a pattern resembling the letter U extending along the length direction (EV), each lateral cavity corresponding to one branch of this U, and in which these two lateral cavities (37, 38) are supplied jointly from the root (P) through the same nozzle (66) of this root (P).

3. Blade according to claim 1, wherein a conduit (52) extending from the extrados wall (21) to the upstream internal wall (40) is connected to the conduit (53) extending from the extrados wall (21) to the intrados wall (20) that is itself connected to a conduit (54) extending from the extrados wall (21) to the downstream internal wall (49), with a trombone circuit type layout (33) to provide cooling air to the trailing edge (18).

4. Blade according to claim 3, comprising a downstream manifold (56) supplied through a conduit (54) in the trombone circuit (33), this downstream manifold (56) extending transversely from the intrados wall (20) to the extrados wall (21), and in which the intrados wall (20) comprises drillings opening into the downstream manifold (56) to form an external cooling air film for the intrados wall (20).

5. Blade according to claim 4, wherein the downstream manifold (56) is supplied from the conduit (54) of the trombone circuit (33) through calibrated passages (58).

6. Blade according to one of claims 2, comprising an underbath cavity (46) extending from a central region of the tip (S) to the trailing edge (18), and at least one central conduit (47) supplying this underbath cavity (46) directly with air collected at the root (P).

7. Blade according to claim 6, wherein the trailing edge comprises a series of through slits (23) on the intrados side, supplied with cooling air, in which these slits (23) comprise:
- one or several last slits close to the tip (S) that are supplied through the underbath cavity (46);
- slits (23) that are supplied through a downstream conduit (61) of the airfoil (61).

8. Blade according to claim 1, comprising an upstream circuit (31) to cool the leading edge (17) of the airfoil (12).

9. Casting means for manufacturing a blade according to claim1, comprising cavities and a set of cores designed to form internal conduits and manifolds, and internal cavities forming a shield.

10. Turbine of a turbomachine, comprising a blade according to claim 1.

11. Turbomachine comprising a turbine according to claim 10.
